# EUROPEAN PATENT APPLICATION

(11) **EP 4 325 965 A1**
(43) Date of publication of application: **21.02.2024**
(21) Application number: 22787293.4
(22) Date of filing: 07.03.2022
(51) Int. Cl.: H04W 72/04

(54) **RANDOM ACCESS METHOD, COMMUNICATION APPARATUS AND COMMUNICATION SYSTEM**

(30) Priority: 15.04.2021 CN 202110404121
(71) Applicant: Huawei Technologies Co., Ltd., Shenzhen, Guangdong 518129 (CN)
(72) Inventor: GUAN, Lei, Shenzhen, Guangdong 518129 (CN); LI, Shengyu, Shenzhen, Guangdong 518129 (CN)
(74) Representative: Huawei European IPR
(86) International application number: PCT/CN2022/079568
(87) International publication number: WO 2022/218063

(57) **Abstract**

This application provides a random access method, a communication apparatus, and a communication system. The method includes: Abase station sends first indication information to a terminal, to indicate that statuses of one or more RACH resources in a RACH resource set are available or unavailable, where each RACH resource in the RACH resource set corresponds to one common signal in a common signal set, and each common signal in the common signal set corresponds to one or more RACH resources in the RACH resource set. The terminal selects an available first RACH resource from the RACH resource set based on the first indication information, and sends a RACH signal to the base station on the first RACH resource. In this solution, the first indication information indicates available RACH resources and unavailable RACH resources to the terminal, so that the terminal selects an available RACH resource based on the first indication information to send the RACH signal, thereby implementing flexible selection of the RACH resource.

## Description

### CROSS-REFERENCE TO RELATED APPLICATIONS

This application claims priority to Chinese Patent Application No. 202110404121.2, filed on April 15, 2021 and entitled "RANDOM ACCESS METHOD, COMMUNICATION APPARATUS, AND COMMUNICATION SYSTEM", which is incorporated herein by reference in its entirety.

### TECHNICAL FIELD

Embodiments of this application relate to the field of wireless communication technologies, and specifically, to a random access method, a communication apparatus, and a communication system.

### BACKGROUND

Compared with a 4th generation (4th generation, 4G) long term evolution (long term evolution, LTE) system, a 5th generation (5th generation, 5G) new radio (new radio, NR) system provides more flexibility in system design, including a basic parameter, a frame structure, a time-frequency resource design of a channel, and the like, and can better support forward compatibility and scalability, but is not flexible enough in selection of a random access channel (random access channel, RACH) resource.

### SUMMARY

This application provides a random access method, a communication apparatus, and a communication system, to implement flexible selection of a RACH resource. Specifically, the following technical solutions may be used for implementation.

According to a first aspect, an embodiment of this application provides a random access method. The method may be performed by a terminal or a module used in the terminal. The method includes: receiving first indication information from a radio access network device, where the first indication information indicates statuses of one or more RACH resources in a RACH resource set, and the status is available or unavailable, where each RACH resource in the RACH resource set corresponds to one common signal in a common signal set, the common signal set includes a plurality of common signals, and each common signal in the common signal set corresponds to one or more RACH resources in the RACH resource set; selecting a first RACH resource from the RACH resource set based on the first indication information; and sending a RACH signal on the first RACH resource.

According to the foregoing solution, by sending the first indication information to the terminal, the radio access network device may indicate available RACH resources and unavailable RACH resources to the terminal. Then, the terminal selects, based on the first indication information, a RACH resource used to send the RACH signal, thereby implementing flexible selection of the RACH resource.

In a possible implementation, based on the first indication information, the first RACH resource is selected from RACH resources corresponding to the first common signal, where the first common signal is a common signal detected by the terminal in the common signal set.

In a possible implementation, the first indication information indicates a status of a RACH resource corresponding to a first common signal in the RACH resource set, but does not indicate a status of a RACH resource corresponding to a second common signal in the RACH resource set, where the second common signal is a common signal in the common signal set, the second common signal is different from the first common signal, and the first common signal is a common signal detected by the terminal in the plurality of common signals.

According to the foregoing solution, the status of the RACH resource can be indicated based on a common signal granularity, and overheads of indication information can be reduced.

In a possible implementation, the first common signal carries the first indication information, but the second common signal does not carry the first indication information; or a broadcast message corresponding to the first common signal carries the first indication information, but a broadcast message corresponding to the second common signal does not carry the first indication information; or a PDCCH corresponding to the first common signal carries the first indication information, but a PDCCH corresponding to the second common signal does not carry the first indication information.

In a possible implementation, a status of the first RACH resource is available; or a status of the first RACH resource is unavailable, but the first RACH resource is a high-priority RACH resource.

In a possible implementation, configuration information from the radio access network device is received, where the configuration information is for configuring a RACH resource corresponding to each common signal in the common signal set; and the configuration information may be carried in an SIB, an MIB, system information, or a PDCCH corresponding to each common signal in the common signal set.

According to a second aspect, an embodiment of this application provides a random access method. The method may be performed by a radio access network device or a module used in the radio access network device. The method includes: sending first indication information, where the first indication information indicates statuses of one or more RACH resources in a RACH resource set, and the status is available or unavailable, where each RACH resource in the RACH resource set corresponds to one common signal in a common signal set, the common signal set includes a plurality of common signals, and each common signal in the common signal set corresponds to one or more RACH resources in the RACH resource set; and receiving a RACH signal carried on a first RACH resource, where the first RACH resource is a RACH resource in the RACH resource set, and a status of the first RACH resource is available, or a status of the first RACH resource is unavailable but the first RACH resource is a high-priority RACH resource.

In a possible implementation, the first RACH resource corresponds to the first common signal, and the first common signal is a common signal detected by the terminal in the common signal set.

In a possible implementation, the first indication information indicates a status of a RACH resource corresponding to a first common signal in the RACH resource set, but does not indicate a status of a RACH resource corresponding to a second common signal in the RACH resource set, where the second common signal is a common signal in the common signal set, and the second common signal is different from the first common signal, where the first common signal carries the first indication information, but the second common signal does not carry the first indication information; or a broadcast message corresponding to the first common signal carries the first indication information, but a broadcast message corresponding to the second common signal does not carry the first indication information; or a PDCCH corresponding to the first common signal carries the first indication information, but a PDCCH corresponding to the second common signal does not carry the first indication information.

In a possible implementation, configuration information is sent to the terminal, where the configuration information is for configuring a RACH resource corresponding to each common signal in the common signal set; and the configuration information may be carried in an SIB, an MIB, system information, or a PDCCH corresponding to each common signal in the common signal set.

In a possible implementation of the first aspect or the second aspect, each common signal in the common signal set carries the first indication information; or a broadcast message corresponding to each common signal in the common signal set carries the first indication information; or a PDCCH corresponding to each common signal in the common signal set carries the first indication information; or a common PDCCH corresponding to the common signal set carries the first indication information.

In a possible implementation of the first aspect or the second aspect, the first indication information indicates the statuses of the one or more RACH resources in the RACH resource set in a first time window, where a length of the first time window is equal to any one of the following, and N is a positive integer: a configuration periodicity of N RACH resources; a sending periodicity of N common signals; or a periodicity of association between N common signals and a RACH.

According to the foregoing solution, the first indication information may indicate statuses of one or more RACH resources in the RACH resource set in the first time window, and the length of the first time window may be configured based on an actual requirement. When the length of the first time window is configured to be relatively long, a quantity of sent first indication information may be reduced, thereby reducing radio overheads.

In a possible implementation of the first aspect or the second aspect, the first indication information includes first information and/or second information, where the first information indicates a status of one RACH resource in the RACH resource set; and the second information indicates statuses of at least two RACH resources in the RACH resource set, the statuses of the at least two RACH resources are the same, and time division multiplexing or frequency division multiplexing is performed between the at least two RACH resources.

According to the foregoing solution, when the first indication information includes the first information, each piece of first information indicates a status of only one RACH resource. Therefore, RACH resource indication precision can be improved. When the first indication information includes the second information, each piece of second information may indicate statuses of a plurality of RACH resources. Therefore, overheads of the first indication information can be reduced.

In a possible implementation of the first aspect or the second aspect, the RACH signal includes a random access preamble and/or a RACH data packet.

According to a third aspect, an embodiment of this application provides a random access method. The method may be performed by a terminal or a module used in the terminal. The method includes: receiving configuration information from a radio access network device, where the configuration information is for configuring a RACH resource corresponding to each common signal in a common signal set, where each common signal in the common signal set corresponds to one or more RACH resources, and different common signals in the common signal set correspond to different RACH resources; receiving second indication information from the radio access network device, where the second indication information indicates to cancel a correspondence between a first RACH resource and a first common signal, the first common signal is a common signal detected by a terminal in the common signal set, and the RACH resource corresponding to the first common signal includes the first RACH resource; selecting, based on the second indication information, a second RACH resource from RACH resources corresponding to the common signal set, where the second RACH resource is different from the first RACH resource, the second RACH resource corresponds to the first common signal or a second common signal in the common signal set, the second common signal is different from the first common signal, and the second common signal is a common signal detected by the terminal; and sending a RACH signal on the second RACH resource.

According to the foregoing solution, a base station may indicate, to the terminal by using the second indication information, to cancel the correspondence between the first common signal and the first RACH resource, that is, to indicate that the first RACH resource is unavailable, and further, when the terminal selects, based on the second indication information, the RACH resource used to send the RACH signal, the first RACH resource is not selected, so that the RACH resource can be flexibly selected based on an indication of the base station.

According to a fourth aspect, an embodiment of this application provides a random access method. The method may be performed by a radio access network device or a module used in the radio access network device. The method includes: sending configuration information, where the configuration information is for configuring a RACH resource corresponding to each common signal in the common signal set; each common signal in the common signal set corresponds to one or more RACH resources, and different common signals in the common signal set correspond to different RACH resources; sending second indication information, where the second indication information indicates to cancel a correspondence between a first RACH resource and a first common signal, and the RACH resource corresponding to the first common signal includes the first RACH resource; and receiving a RACH signal carried on a second RACH resource, where the second RACH resource is different from the first RACH resource, the second RACH resource corresponds to the first common signal or a second common signal in the common signal set, and the second common signal is different from the first common signal.

In a possible implementation of the third aspect or the fourth aspect, the second indication information further indicates to establish a correspondence between the first RACH resource and a third common signal, where the third common signal is a common signal in the common signal set, and the third common signal is different from the first common signal.

In a possible implementation of the third aspect or the fourth aspect, the second indication information further indicates to cancel a correspondence between the third RACH resource and a fourth common signal, where the fourth common signal is a common signal in the common signal set, and the fourth common signal is different from the first common signal.

According to the foregoing solution, the RACH resource may be reconfigured for the first common signal, thereby improving selection diversity of the RACH resource.

In a possible implementation of the third aspect or the fourth aspect, the second indication information further indicates to establish a correspondence between the third RACH resource and the first common signal, where the third RACH resource is a RACH resource other than the RACH resource corresponding to the first common signal.

In a possible implementation of the third aspect or the fourth aspect, each common signal in the common signal set carries the second indication information; or a broadcast message corresponding to each common signal in the common signal set carries the second indication information; or a PDCCH corresponding to each common signal in the common signal set carries the second indication information; or a common PDCCH corresponding to the common signal set carries the second indication information.

In a possible implementation of the third aspect or the fourth aspect, the first common signal carries the second indication information, but the fifth common signal does not carry the second indication information; or a broadcast message corresponding to the first common signal carries the second indication information, but a broadcast message corresponding to the fifth common signal does not carry the second indication information; or a PDCCH corresponding to the first common signal carries the second indication information, but a PDCCH corresponding to the fifth common signal does not carry the second indication information, where the fifth common signal is a common signal in the common signal set, and the fifth common signal is different from the first common signal.

In a possible implementation of the third aspect or the fourth aspect, the configuration information may be carried in an SIB, an MIB, system information, or a PDCCH corresponding to each common signal in the common signal set.

In a possible implementation of the third aspect or the fourth aspect, the RACH signal includes a random access preamble and/or a RACH data packet.

According to a fifth aspect, an embodiment of this application provides a communication apparatus. The apparatus may be a terminal, or may be a chip used in the terminal. The apparatus has a function of implementing any implementation in the first aspect and the third aspect. This function may be implemented by using hardware, or may be implemented by executing corresponding software by hardware. The hardware or the software includes one or more modules corresponding to the foregoing functions.

According to a sixth aspect, an embodiment of this application provides a communication apparatus. The apparatus may be a radio access network device, or may be a chip or a module used in the radio access network device. The apparatus has a function of implementing any implementation in the second aspect and the fourth aspect. This function may be implemented by using hardware, or may be implemented by executing corresponding software by hardware. The hardware or the software includes one or more modules corresponding to the foregoing functions.

According to a seventh aspect, an embodiment of this application provides a communication apparatus, including a processor and a memory, where the memory is configured to store computer instructions, when the apparatus runs, the processor executes the computer instructions stored in the memory, so that the apparatus performs any implementation in the first aspect to the fourth aspect.

According to an eighth aspect, an embodiment of this application provides a communication apparatus, including units or means (means) configured to perform steps of any implementation in the first aspect to the fourth aspect.

According to a ninth aspect, an embodiment of this application provides a communication apparatus, including a processor and an interface circuit. The processor is configured to communicate with another apparatus by using the interface circuit, and perform any implementation in the first aspect to the fourth aspect. There are one or more processors.

According to a tenth aspect, an embodiment of this application provides a communication apparatus, including a processor coupled to a memory. The processor is configured to invoke a program stored in the memory, to perform any implementation in the first aspect to the fourth aspect. The memory may be located inside or outside the apparatus. In addition, there may be one or more processors.

According to an eleventh aspect, an embodiment of this application further provides a computer-readable storage medium, where the computer-readable storage medium stores instructions, and when the instructions are run on a communication apparatus, any implementation in the first aspect to the fourth aspect is performed.

According to a twelfth aspect, an embodiment of this application further provides a computer program product. The computer program product includes a computer program or instructions. When the computer program or the instructions are run by a communication apparatus, any implementation in the first aspect to the fourth aspect is performed.

According to a thirteenth aspect, an embodiment of this application further provides a chip system, including: a processor, configured to perform any implementation in the first aspect to the fourth aspect.

According to a fourteenth aspect, an embodiment of this application further provides a communication system. The communication system includes a communication apparatus configured to perform any implementation of the first aspect and a communication apparatus configured to perform any implementation of the second aspect.

According to a fifteenth aspect, an embodiment of this application further provides a communication system. The communication system includes a communication apparatus configured to perform any implementation of the third aspect and a communication apparatus configured to perform any implementation of the fourth aspect.

### BRIEF DESCRIPTION OF DRAWINGS

FIG. 1 is a schematic diagram of an architecture of a communication system to which an embodiment of this application is applied;
FIG. 2 is a schematic diagram of a time-frequency resource location of a signal/channel in a 4G LTE system;
FIG. 3 is a schematic diagram of a resource location of an SSB in a 5G NR system;
FIG. 4 is a schematic diagram of an association relationship between an SSB and a RACH resource in a 5G NR system;
FIG. 5 is a schematic diagram of uplink scheduling restriction between different uplink receiving beams;
FIG. 6 is a schematic diagram of a random access method according to an embodiment of this application;
FIG. 7 is a schematic diagram of a correspondence between a common signal and a RACH resource;
FIG. 8 is a schematic diagram of a random access method according to an embodiment of this application;
FIG. 9 is a schematic diagram of a structure of a communication apparatus according to an embodiment of this application; and
FIG. 10 is a schematic diagram of a structure of a communication apparatus according to an embodiment of this application.

### DESCRIPTION OF EMBODIMENTS

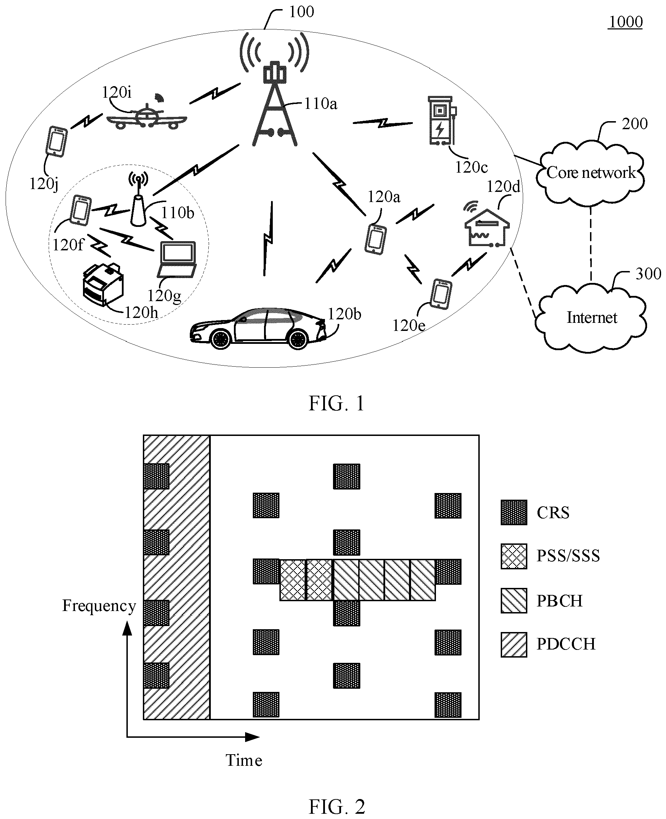

FIG. 1 is a schematic diagram of an architecture of a communication system to which an embodiment of this application is applied. As shown in FIG. 1, a communication system 1000 includes a radio access network 100 and a core network 200. Optionally, the communication system 1000 may further include an Internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or a part of functions of the core network device and a part of functions of the radio access network device are integrated into one physical device. A wired or wireless manner may be used for connection between terminals and between radio access network devices. FIG. 1 is only a schematic diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, abase station in a future mobile communication system, an access node in a wireless fidelity (wireless fidelity, Wi-Fi) system, or the like; or may be a module or a unit that implements some functions of the base station, for example, may be a central unit (central unit, CU), or may be a distributed unit (distributed unit, DU). The CU herein implements functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, reference may be made to technical specifications related to the 3rd generation partnership project (3rd generation partnership project, 3 GPP). The radio access network device may be a macro base station (for example, 110a in FIG. 1), or may be a micro base station or an indoor station (for example, 110b in FIG. 1), or may be a relay node, a donor node, or the like. A specific technology and a specific device form used by the radio access network device are not limited in this embodiment of this application. In this embodiment of this application, an example in which a base station is used as a radio access network device is used for description.

The terminal may also be referred to as a terminal device, a user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), the Internet of Things (internet of things, loT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless sending and receiving function, a wearable device, a vehicle, an airplane, a ship, a robot, a robotic arm, a smart home device, or the like. A specific technology and a specific device form used by the terminal are not limited in this embodiment of this application.

The base station and the terminal may be fixed or movable. The base station and the terminal may be deployed on land, including indoor or outdoor, handheld, or vehicle-mounted; may also be deployed on the water surface; and may also be deployed in an aircraft, a balloon, and a satellite in the air. An application scenario of the base station and the terminal are not limited in embodiments of this application.

A role of the base station and the terminal may be opposite, for example, the helicopter or UAV 120i in FIG. 1 may be configured as the mobile base station, and for the terminal 120j accessing the radio access network 100 through 120i, the terminal 120i is the base station; however, for the base station 110a, 120i is the terminal, that is, communication between the 110a and the 120i is performed by using a wireless air interface protocol. Certainly, communication may also be performed between 110a and 120i by using an interface protocol between base stations. In this case, compared with 110a, 120i is also the base station. Therefore, both the base station and the terminal may be collectively referred to as a communication apparatus, 110a and 110b in FIG. 1 may be referred to as a communication apparatus having a base station function, and 120a to 120j in FIG. 1 may be referred to as a communication apparatus having a terminal function.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in this embodiment of this application.

In embodiments of this application, a function of the base station may be performed by a module (such as a chip) in the base station, or may be performed by a control subsystem including a base station function. A control subsystem that includes a base station function herein may be a control center in an application scenario, such as a smart grid, an industrial control, an intelligent transportation, and a smart city. A function of the terminal may alternatively be performed by a module (such as a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes a wireless connection to the terminal is referred to as a serving cell of the terminal. When communicating with the serving cell, the terminal is further interfered by a signal from a neighboring cell.

In this embodiment of this application, the time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, symbols in this embodiment of this application are time domain symbols.

It may be understood that in this embodiment of this application, a physical downlink shared channel (physical downlink shared channel, PDSCH), a physical downlink control channel (physical downlink control channel, PDCCH), a physical uplink shared channel (physical uplink shared channel, PUSCH), and a physical broadcast channel (physical broadcast channel, PBCH) are merely used as examples of a downlink data channel, a downlink control channel, an uplink data channel, and a broadcast channel respectively. In different systems and different scenarios, the data channel, the control channel, and the broadcast channel may have different names. This is not limited in this embodiment of this application.

In a 4G LTE system, basic system parameters, frame structures, and time-frequency resource design of signals are relatively fixed. Specifically,
first, in terms of basic system parameters and frame structures, the 4G LTE system supports only a fixed 15 kilohertz (kilohertz, kHz) subcarrier spacing (subcarrier spacing, SCS). One radio frame includes 10 subframes, each subframe includes 14 OFDM symbols (symbols for short below) for a normal cyclic prefix, and a time domain scheduling granularity is one subframe. Only a limited quantity of carrier bandwidths are supported, and specifically include six types of bandwidths: 1.4 megahertz (megahertz, MHz), 3 MHz, 5 MHz, 10 MHz, 15 MHz, and 20 MHz. A frequency scheduling granularity is 12 subcarriers, that is, a bandwidth of one resource block (resource block, RB). The RB is a basic time-frequency scheduling unit, and specifically includes a time-frequency two-dimensional resource that includes one subframe in time domain and 12 subcarriers in frequency. One subcarrier in one symbol is a smallest time-frequency resource, and is referred to as a resource element (resource element, RE), that is, one RB includes 12 × 14 REs.

Second, in terms of a time-frequency resource of a signal, in a subframe, a signal used for initial access is located in a bandwidth of six RBs in a carrier center, and includes a primary synchronization signal (primary synchronization signal, PSS), a secondary synchronization signal (secondary synchronization signal, SSS), and a PBCH. FIG. 2 is a schematic diagram of a time-frequency resource location of a signal/channel in a 4G LTE system. The terminal can obtain the carrier bandwidth only after receiving the PBCH. Sending periodicities of the PSS and the SSS are five subframes, and a sending periodicity of the PBCH is ten subframes. Regardless of whether data transmission exists, a cell-specific reference signal (cell-specific reference signal, CRS) needs to be sent on each RB in each subframe, for functions such as measurement, channel estimation, demodulation, and time-frequency tracking. The PDCCH is used for scheduling uplink and downlink data channels and common information. Specifically, the PDCCH is scattered over an entire carrier bandwidth in a time-frequency interleaving manner. The time domain is located in the first n symbols of a subframe, and n is one of natural numbers 1 to 4. In this application, the common information may include a system information block (system information block, SIB), a RACH response, a paging message, and the like.

In a 5G NR system, design of a basic system parameter, a frame structure, and a time-frequency resource of a signal are relatively flexible. Specifically,
first, in terms of basic system parameters and frame structures, the 5G NR system supports a plurality of SCSs. Specifically, for a frequency range 1 (generally considered below 6 GHz), the 5G NR system supports SCSs of 15 kHz, 30 kHz, and 60 kHz. For a frequency range 2 (generally considered above 6 GHz), SCSs of 60 kHz and 120 kHz are supported. One radio frame includes 10 subframes, and a duration of each subframe is 1 millisecond (ms). A time domain scheduling granularity of the NR system is defined as a slot, and each slot includes 14 OFDM symbols for a normal cyclic prefix. Therefore, for different SCSs, a quantity of slots included in one subframe is different. For example, for a 15 kHz SCS, one subframe includes one slot. For a 30 kHz SCS, one subframe includes two slots, and a duration of each slot is 0.5 ms. The NR communication system supports flexible carrier bandwidth, that is, there are only a limited quantity of carrier bandwidths of the LTE system, and a basic scheduling granularity in frequency domain is also 12 subcarriers.

Second, in terms of a time-frequency resource of a signal, a signal used for initial access in the NR system is referred to as a synchronization signal/PBCH block (synchronization signal/PBCH block, SSB), and the SSB includes a PSS, an SSS, and a PBCH. The frequency domain location of the SSB in the carrier is flexible, that is, the SSB does not need to be restricted to be located in the center of the carrier as in the LTE system. A concept of a bandwidth part (bandwidth part, BWP) is introduced into the NR system, and a system-level carrier is decoupled from a terminal-level BWP. For example, the NR system may support a carrier with a bandwidth of 100 MHz, but the terminal may support only a 20 MHz BWP receiving capability of the carrier. In terms of a time domain periodicity, the NR supports a plurality of sending periodicities of the SSB. In an initial access phase, the terminal assumes that the sending periodicity of the SSB is 20 ms, that is, a duration of two radio frames. To improve coverage, a beamforming mechanism is introduced for a common channel in the NR system, and omnidirectional coverage is implemented by performing beam sending on a plurality of SSBs. In addition, the NR system further introduces an association relationship between the SSB and the RACH resource used to send a RACH signal, to implement consistency between the sending beam of the SSB and the receiving beam of the RACH signal, and improve the quality of the sent signal of the SSB and the quality of the received signal of the RACH. In addition, in the LTE system, regardless of whether data transmission exists, a CRS that always exists needs to be sent on each RB of each subframe. However, the NR system cancels the always-existing signal sending, and instead introduces a reference signal (reference signal, RS) of a corresponding function in a function decoupling manner, for example, an SSS for higher layer measurement or a channel status information-reference signal (channel status information-reference signal, CSI-RS), a CSI-RS for channel estimation or a demodulation reference signal (demodulation reference signal, DMRS), or the like, RSs for each function are configured and sent as required. The PDCCH is still used for scheduling uplink and downlink data channels and common information. However, the PDCCH does not need to be scattered to the entire carrier bandwidth in a time-frequency interleaving manner, but may be sent in frequency domain resources of some RBs in the carrier. This part of RBs is referred to as a control resource set (control resource set, CORESET). A detection location of a PDCCH in a time domain is determined by a search space configuration. Unlike an LTE system, the PDCCH needs to be detected in each subframe.

In conclusion, compared with 4G LTE, the 5G NR communication system provides more flexibility in system design, including design of a basic parameter, a frame structure, a time-frequency resource of a channel, and the like, and can better support forward compatibility and scalability.

In an NR system, an initial access procedure of a terminal mainly includes the following steps. First, the terminal detects the PSS and the SSS, completes time-frequency synchronization with the NR system, and obtains a physical cell identifier. Then, the terminal receives a master information block (master information block, MIB) in the PBCH, and obtains necessary system information of the NR system, including an initial BWP and a time-frequency resource configuration of a PDCCH for scheduling a common channel. The time-frequency resource configuration includes a frequency domain CORESET resource configuration and a time domain search space resource configuration. Then, the terminal receives a SIB1, and obtains necessary system information other than the system information in the MIB, including RACH configuration, time division duplexing (time division duplexing, TDD) frame structure configuration, and the like. Then, the terminal detects a system paging message, or the terminal sends random access to establish a radio resource control (radio resource control, RRC) connection to the base station. After the RRC connection is successfully established, the terminal and the base station can perform normal data transmission.

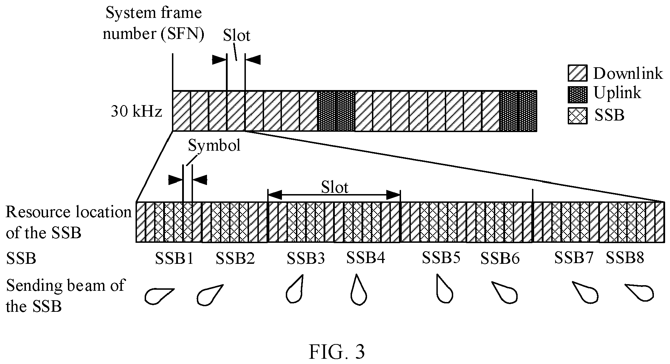

To implement omnidirectional coverage of a common channel in initial access, the NR uses a beamforming mechanism, and sends a plurality of SSBs in a time division multiplexing (time division multiplexing, TDM) manner in a plurality of beam directions. This sending manner may be referred to as an SSB sending manner or an SSB beam sweeping sending manner. For a plurality of to-be-sent SSBs, the plurality of SSBs use a TDM resource multiplexing manner, and a resource location of each SSB is fixed. FIG. 3 is a schematic diagram of a resource location of an SSB in a 5G NR system. In one SSB periodicity, one set of SSB beams can be sent in a TDM manner. For example, for an NR system deployed on a frequency band of 3 GHz to 6 GHz, the set of SSBs includes an SSB1 to an SSB8. Index numbers of the eight SSBs are successively #0 to #7. The frequency domain location of the SSB is relatively flexible, and only needs to be on a predefined frequency raster. For a time domain location of an SSB, the set of SSBs is located in a first half frame of a radio frame, and a time domain location of each SSB is fixed. In FIG. 3, an SCS of 30 kHz is used as an example. The eight SSBs are located in the first four slots of the first half frame, and specific symbol locations are also fixed locations shown in FIG. 3. For the plurality of sent SSBs, beam sending directions of the plurality of SSBs are different, and the plurality of SSBs are sent in a fixed order. The eight SSBs shown in FIG. 3 are used as an example. Beam directions of the SSB1 to the SSB8 are respectively a direction 1 to a direction 8. When the eight SSBs are sent, a sending order is successively as follows: An SSB1 beam is sent in a direction 1, an SSB2 beam is sent in a direction 2, an SSB3 beam is sent in a direction 3, an SSB4 beam is sent in a direction 4, an SSB5 beam is sent in a direction 5, an SSB6 beam is sent in a direction 6, an SSB7 beam is sent in a direction 7, and an SSB8 beam is sent in a direction 8. Therefore, the base station sends the beams of the plurality of SSBs on corresponding resources based on the fixed direction.

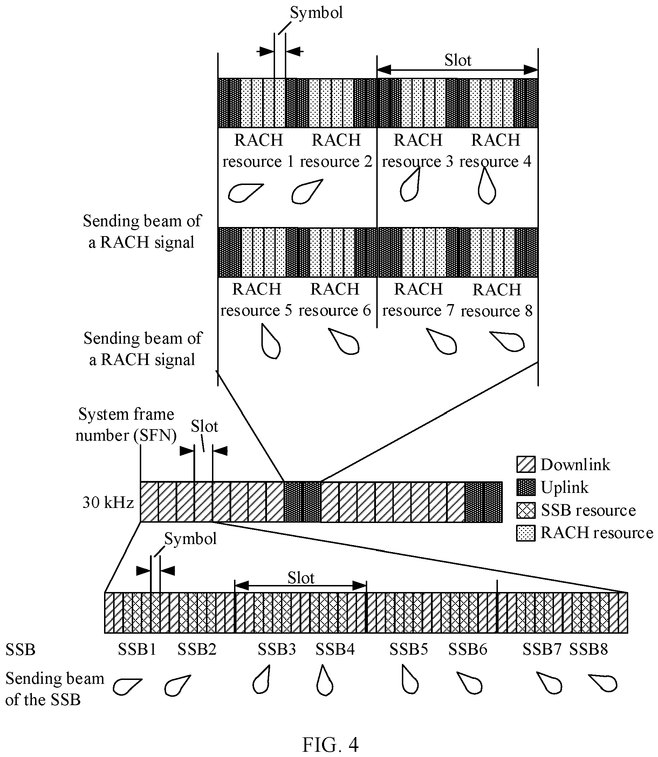

Further, there is an association relationship between the sending beam of the SSB and the receiving beam of the RACH signal. FIG. 4 is a schematic diagram of an association relationship between an SSB and a RACH resource in a 5G NR system. The RACH resource is used to send a RACH signal. An SSB1 corresponds to a RACH resource 1, and a sending beam of the SSB1 corresponds to a receiving beam of the RACH signal on the RACH resource 1. An SSB2 corresponds to a RACH resource 2, and a sending beam of the SSB2 corresponds to a receiving beam of the RACH signal on the RACH resource 2. An SSB3 corresponds to a RACH resource 3, and a sending beam of the SSB3 corresponds to a receiving beam of the RACH signal on the RACH resource 3. An SSB4 corresponds to a RACH resource 4, and a sending beam of the SSB4 corresponds to a receiving beam of the RACH signal on the RACH resource 4. An SSB5 corresponds to a RACH resource 5, and a sending beam of the SSB5 corresponds to a receiving beam of the RACH signal on the RACH resource 5. An SSB6 corresponds to a RACH resource 6, and a sending beam of the SSB6 corresponds to a receiving beam of the RACH signal on the RACH resource 6. An SSB7 corresponds to a RACH resource 7, and a sending beam of the SSB7 corresponds to a receiving beam of the RACH signal on the RACH resource 7. An SSB8 corresponds to a RACH resource 8, and a sending beam of the SSB8 corresponds to a receiving beam of the RACH signal on the RACH resource 8. That a sending beam of one SSB corresponds to a receiving beam of a RACH signal on one RACH resource means that if the base station sends an SSB by using a beam, the RACH signal on the RACH resource corresponding to the SSB is still received by using the beam. That is, the base station uses a same beam to send the SSB and receive the RACH signal on the RACH resource corresponding to the SSB. When the base station sends the SSB by using the beam, the beam may be referred to as a sending beam of the SSB. When the base station receives the RACH signal by using the beam, the beam may be referred to as a receiving beam of the RACH signal. Therefore, a direction of a sending beam of one SSB is the same as a direction of a receiving beam of a RACH signal on a RACH resource corresponding to the SSB.

Assuming that the SSB detected by the terminal is the SSB2, the terminal subsequently sends the RACH signal to the base station on the RACH resource 2 corresponding to the SSB2. The base station receives, on the RACH resource 2, the RACH signal sent by the terminal on the RACH resource by using the receiving beam corresponding to the sending beam direction of the SSB2, and then the base station may learn that the terminal accesses the base station by detecting the SSB2. Subsequently, when the base station sends a series of downlink messages such as the RACH response to the terminal, a direction of a used sending beam is the same as a direction of a sending beam of the SSB2. In this method, a downlink sending beam is associated with an uplink receiving beam, so that signal quality of downlink sending and uplink receiving can be enhanced, thereby improving an uplink and downlink coverage capability of a signal.

Currently, the initial access mechanism of the 5G NR system described above still has the following two problems.

Problem: 1: Uplink scheduling is limited between different uplink receiving beams.

For a frequency range 2, because the frequency is relatively high, more antenna elements are used to implement narrower beams, thereby obtaining a larger beamforming gain. Currently, an analog beam is mainly used in the industry. For the analog beamforming mechanism, a same beam weighting value is used for all frequency domain resources at a same moment. As a result, a beam at the moment can point to only one direction. Therefore, for an uplink receiving beam, when the base station receives a RACH signal in a direction, the base station cannot simultaneously receive an uplink signal in another direction. In other words, in the analog beamforming mechanism of the frequency range 2, uplink scheduling is limited between different uplink receiving beams.

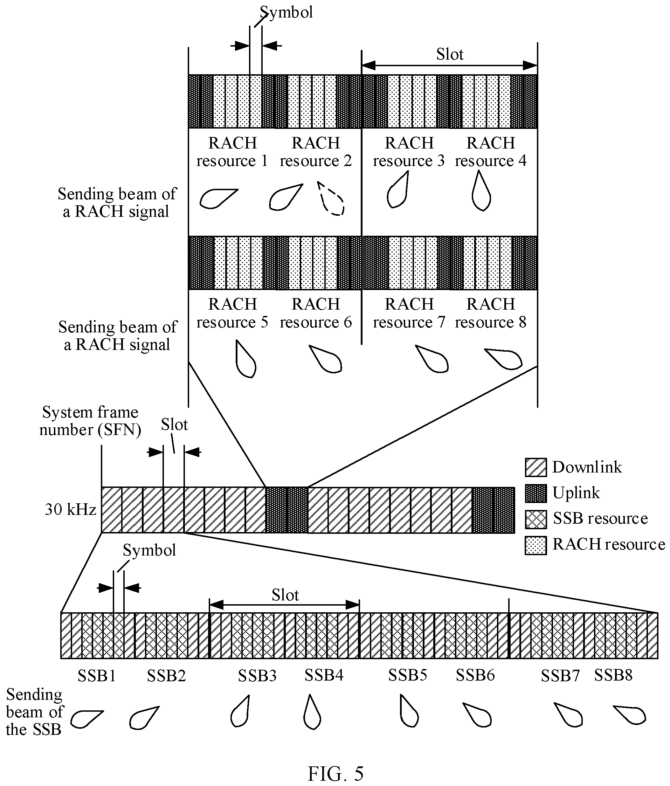

The following provides description with reference to an example. FIG. 5 is a schematic diagram of uplink scheduling restriction between different uplink receiving beams. Assuming that a terminal 1 detects the SSB2, the terminal 1 chooses to send the RACH signal on the RACH resource 2. For example, at a moment when the terminal sends the RACH signal on the RACH resource 2, in another direction (an uplink receiving beam represented by dashed lines in FIG. 5), a terminal 2 needs to send an uplink signal. In this case, the base station has two implementations:

In an implementation 1, the base station does not schedule, at the moment, the terminal 2 to send the uplink signal, but receives the RACH signal sent by the terminal 1 on the RACH resource 2. This method has a problem as follows: Because the RACH signal occupies a relatively small quantity of RBs in frequency domain, a large quantity of frequency domain resources are wasted because the RACH signal is sent at this moment.

In an implementation 2, the base station schedules, at the moment, the terminal 2 to send an uplink signal, and does not receive the RACH signal sent by the terminal 1 on the RACH resource 2. This method has a problem as follows: The terminal 1 sends the RACH signal at this moment, but does not receive the RACH response from the base station. As a result, the terminal 1 keeps waiting for the RACH response from the base station within the RACH response time window, and the RACH access delay of the terminal 1 is greatly delayed.

Problem 2: A scheduling restriction on an uplink moment and a downlink moment of the opposite direction.

According to the current standard protocol, at a RACH occasion moment, the base station cannot send a downlink signal, and cannot modify the moment to a downlink transmission direction.

Therefore, if there is a downlink service requirement but there is no uplink service requirement other than the RACH signal at a specific RACH occasion moment, the base station cannot schedule a downlink service, resulting in a downlink capacity loss, or the downlink service is delayed.

To resolve the foregoing problem, this embodiment of this application provides two different random access methods, which are separately described in detail later.

Before the solutions in embodiments of this application are described, some nouns or terms in embodiments of this application are first described.

### 1. Common signal set

In this embodiment of this application, a base station sends beams of a plurality of common signals to a terminal, and the terminal may detect one or more of the common signals. A set formed by the plurality of common signals is referred to as a common signal set.

In an implementation, each common signal in the common signal set includes a synchronization signal and a broadcast channel. The synchronization signal includes a PSS and/or an SSS. The broadcast signal may be a PBCH, and the PBCH is used to carry an MIB. A PDCCH associated with the common signal may schedule a channel that carries an SIB. The SIB herein includes a SIB 1, and may further include another SIB, for example, a SIB-X. It should be noted that When each common signal includes a PSS, an SSS, and a PBCH, the common signal is one SSB. In this case, the common signal set may also be referred to as an SSB set. Alternatively, the common signal may be directly associated with the SIB, that is, system information does not need to be scheduled by the PDCCH.

In another implementation, each common signal in the common signal set includes a synchronization signal. For example, the synchronization signal may be a PSS, an SSS, or a set of a PSS and an SSS. The PDCCH associated with the common signal may schedule a channel that carries the system information. The system information herein may be information formed by an MIB and an SIB, that is, information currently included in the MIB and the SIB respectively. The SIB herein includes a SIB 1, and may further include another SIB, for example, the SIB-X. Alternatively, the common signal may be directly associated with the foregoing system information, that is, the system information does not need to be scheduled by the PDCCH.

### 2. RACH resource set

Each common signal in a common signal set may correspond to one or more RACH resources. A set formed by RACH resources corresponding to each common signal in the common signal set is referred to as a RACH resource set.

The meaning that one common signal corresponds to one or more RACH resources is as follows: When the RACH resource corresponding to the common signal is selected to send the RACH signal, one RACH resource may be selected from one or more RACH resources corresponding to the common signal, to send the RACH signal.

In this embodiment of this application, one common signal may correspond to one or more RACH resources, but one RACH resource corresponds to only one common signal in the common signal set.

Example 1: The common signal set includes a common signal 1, a common signal 2, a common signal 3, and a common signal 4.

The common signal 1 corresponds to a RACH resource 1, a RACH resource 2, and a RACH resource 3.

The common signal 2 corresponds to a RACH resource 4.

The common signal 3 corresponds to a RACH resource 5 and a RACH resource 6.

The common signal 4 corresponds to a RACH resource 7, a RACH resource 8, and a RACH resource 9.

Therefore, the RACH resource set corresponding to the common signal set includes the RACH resource 1, the RACH resource 2, the RACH resource 3, the RACH resource 4, the RACH resource 5, the RACH resource 6, the RACH resource 7, the RACH resource 8, and the RACH resource 9.

The random access method provided in this embodiment of this application may be performed by a terminal or a module used in the terminal, and a base station or a module used in the base station. For ease of description, in the following description, an example in which the terminal and the base station perform the method is used for description.

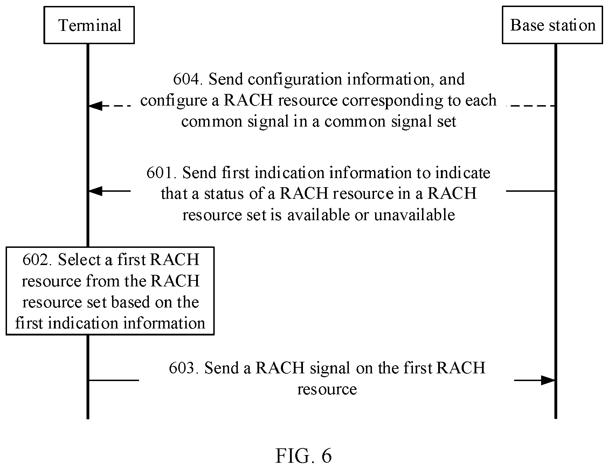

FIG. 6 is a schematic diagram of a random access method according to an embodiment of this application. In the method, the base station may indicate, by sending first indication information to the terminal, available RACH resources and unavailable RACH resources to the terminal, so that the terminal selects an available RACH resource based on the first indication information to send the RACH signal, thereby implementing flexible selection of the RACH resource.

The method includes the following operations:
601. A base station sends first indication information. Correspondingly, the terminal receives the first indication information.

The first indication information indicates statuses of one or more RACH resources in a RACH resource set, and the status is available or unavailable. In other words, the first indication information indicates available RACH resources and unavailable RACH resources in the RACH resource set. Each RACH resource in the RACH resource set corresponds to one common signal in a common signal set, the common signal set includes a plurality of common signals, and each common signal in the common signal set corresponds to the one or more RACH resources in the RACH resource set.

602. A terminal selects a first RACH resource from a RACH resource set based on the first indication information.

In an implementation, the terminal may select the first RACH resource from RACH resources corresponding to the first common signal, where the first common signal is a common signal detected by the terminal in the common signal set. For example, if a signal receiving power of the first common signal exceeds a signal receiving power detection threshold, the first common signal is detected by the terminal. Specifically, the terminal selects, based on the first indication information, an available RACH resource from the RACH resource set corresponding to the first common signal as a first RACH resource.

603. The terminal sends a RACH signal on the first RACH resource. Correspondingly, the base station receives the RACH signal carried on the first RACH resource.

In this embodiment of this application, the RACH signal may include a random access preamble (preamble) and/or a RACH data packet. For a conventional four-step random access process, the RACH signal includes a random access preamble, which is also referred to as a message 1. In this case, the RACH signal may not include a RACH data packet. For a two-step random access process, in one case, the RACH signal includes a random access preamble and a RACH data packet, that is, the RACH signal is sent in one step, which is also referred to as a message A. In another case of the two-step random access process, the RACH signal includes a RACH data packet. In this case, the RACH signal may not include a random access preamble. In this case, it is generally assumed that an uplink synchronization parameter does not need to be adjusted by sending a random access preamble in an uplink synchronization scenario.

According to the foregoing solution, the base station may indicate available RACH resources and unavailable RACH resources to the terminal by using the first indication information, so that the terminal selects, based on the first indication information, a RACH resource used to send the RACH signal, thereby implementing flexible selection of the RACH resource.

In an implementation, when a resource is a RACH resource corresponding to a common signal detected by a first terminal, but the base station expects to schedule a second terminal to send an uplink signal by using a time unit (for example, a subframe, a slot, or a sub-slot) in which the resource is located, the second terminal and the first terminal herein are located in different geographical locations of a same cell, and the base station needs to receive, by using beams having different beam directions, uplink signals sent by the first terminal and the second terminal. The base station may indicate, to the first terminal by using the first indication information, that the RACH resource is unavailable, so that the first terminal does not send the RACH signal by using the RACH resource, and the base station may schedule the second terminal to send the uplink signal in the time unit in which the RACH resource is located. By using this method, the problem 1 mentioned above can be solved.

In an implementation, when a resource is a RACH resource corresponding to a common signal detected by the first terminal, but the base station expects to send a downlink signal to the second terminal by using a time unit in which the resource is located, the second terminal and the first terminal herein may be different terminals, or may be a same terminal. The base station may indicate, to the first terminal by using the first indication information, that the RACH resource is unavailable, so that the first terminal does not send the RACH signal by using the RACH resource, and the base station may send the downlink signal to the second terminal by using the time unit in which the RACH resource is located. By using this method, the problem 2 mentioned above can be solved.

In an implementation, the first indication information in the foregoing operation 601 may be indicated based on a granularity of a common signal. In other words, each common signal in the common signal set corresponds to one piece of first indication information, and the first indication information indicates statuses of one or more RACH resources in RACH resources corresponding to the common signal.

For example, the common signal set includes a first common signal and a second common signal, and the second common signal is different from the first common signal. The base station may send, to the terminal, first indication information corresponding to the first common signal, where the first indication information indicates statuses of one or more RACH resources in the RACH resources corresponding to the first common signal, but does not indicate a status of a RACH resource corresponding to the second common signal. In an implementation, the method for sending the first indication information includes but is not limited to the following method A1 to method A3:
Method A1: The first common signal carries the first indication information, but the second common signal does not carry the first indication information.
Method A2: A broadcast message corresponding to the first common signal carries the first indication information, but a broadcast message corresponding to the second common signal does not carry the first indication information. In this embodiment of this application, the broadcast message may be an MIB or a SIB, and may be carried by a PBCH or a PDSCH.

In this embodiment of this application, a meaning of the broadcast message corresponding to the first common signal is: The first common signal includes the broadcast message, or a channel corresponding to the first common signal includes the broadcast message. For example, when the first common signal is an SSB, and the SSB includes a synchronization signal (that is, an SSS and/or a PSS) and a PBCH, the broadcast message may be an MIB, and the MIB is carried in the PBCH. In this case, the broadcast message corresponding to the first common signal means that the SSB includes the broadcast message. For another example, when the first common signal includes a synchronization signal (that is, an SSS and/or a PSS), but does not include a PBCH, the broadcast message may be a SIB, and the SIB is carried in a PDSCH. In this case, the broadcast message corresponding to the first common signal means that the PDSCH corresponding to the SSB includes the broadcast message.

Method A3: A PDCCH corresponding to the first common signal carries the first indication information, but a PDCCH corresponding to the second common signal does not carry the first indication information. The PDCCH herein may be a PDCCH for scheduling a channel carrying a SIB, or a PDCCH for scheduling a paging message, or another PDCCH.

With reference to the foregoing example 1, the base station may send four pieces of indication information to the terminal, which are respectively referred to as indication information 1, indication information 2, indication information 3, and indication information 4. The indication information 1 indicates statuses of one or more RACH resources of the RACH resource 1, the RACH resource 2, or the RACH resource 3, the indication information 2 indicates a status of the RACH resource 4, the indication information 3 indicates a status of the RACH resource 5 and/or the RACH resource 6, and the indication information 4 indicates statuses of one or more RACH resources of the RACH resource 7, the RACH resource 8, or the RACH resource 9. It should be noted that the indication information 1, the indication information 2, the indication information 3, and the indication information 4 herein are specific examples of the first indication information in the foregoing operation 601.

In another implementation, the first indication information in the foregoing operation 601 may be indicated based on a granularity of a common signal set. In other words, one common signal set corresponds to one piece of first indication information, and the first indication information indicates statuses of one or more RACH resources in RACH resources corresponding to the common signal set. In the following method B1 to method B3, the base station may send a plurality of pieces of first indication information to the terminal. The sent first indication information is in a one-to-one correspondence with common signals in the common signal set, and content of first indication information corresponding to different common signals may be the same or may be different. The first indication information corresponding to each common signal in the common signal set may be used to indicate a status of each RACH resource in the RACH resource set, and is not only used to indicate statuses of one or more RACH resources corresponding to a specific common signal. Alternatively, in the following method B4, the base station may send one piece of first indication information to the terminal, where the first indication information corresponds to the common signal set. In an implementation, the method for sending the first indication information includes but is not limited to the following method B1 to method B4:
Method B 1: Each common signal in the common signal set carries the first indication information.
Method B2: A broadcast message corresponding to each common signal in the common signal set carries the first indication information.
Method B3: A PDCCH corresponding to each common signal in the common signal set carries the first indication information.

The PDCCH herein may be a PDCCH for scheduling a channel carrying a SIB, or a PDCCH for scheduling a paging message, or another PDCCH.

Method B4: A common PDCCH corresponding to the common signal set carries the first indication information.

With reference to the foregoing example 1, if the foregoing method B1, method B2, or method B3 is used, the base station sends four pieces of first indication information to the terminal, where each piece of first indication information corresponds to one common signal, and content of each piece of first indication information may be the same or different. The common signal corresponding to each piece of first indication information has a same function, that is, indicating statuses of one or more RACH resources in the RACH resource 1 to the RACH resource 9. If the foregoing method B4 is used, the base station sends one piece of first indication information to the terminal, where the first indication information is used to indicate statuses of one or more RACH resources in the RACH resource 1 to the RACH resource 9.

In an implementation, the first indication information sent by the base station to the terminal may indicate statuses of one or more RACH resources in the RACH resource set in the first time window. A length of the first time window is equal to a configuration periodicity of N RACH resources, a sending periodicity of N common signals, or a periodicity of association between N common signal and RACH resource, where N is a positive integer.

The RACH resource configuration periodicity is a repetition periodicity of configured RACH resources. The RACH resource appears repeatedly in a time periodicity, which is the RACH resource configuration periodicity. The RACH resource configuration periodicity may be one or more radio frames, and one radio frame is 10 ms. That the RACH resource configuration periodicity is two radio frames is used as an example. Every two radio frames have a period of time that includes the RACH resource. For example, the period of time is two slots. In this case, the RACH resources in the two slots repeatedly appear by using the two radio frames as a periodicity. That is, two slots including RACH resources appear once every two radio frames.

The sending periodicity of the common signal is a periodicity of sending the common signal. The base station sends the common signal in the common signal set at a specific periodicity, and this periodicity is a sending periodicity of the common signal. For example, the common signal is an SSB. It is assumed that the common signal set includes eight SSBs. In this case, the base station sends the eight SSBs at a specific periodicity, for example, sends the eight SSBs at a periodicity of 20 ms.

The periodicity of association between the common signal and the RACH resource is a periodicity used to associate the common signal with the RACH resource, and the association periodicity is one or more RACH resource configuration periodicities, so that each common signal in the common signal set in the association periodicity has an associated RACH resource. For example, the common signal is an SSB. It is assumed that an SSB set includes eight SSBs, and each SSB needs to be associated with one RACH resource. In an example, it is assumed that one RACH resource configuration periodicity includes eight RACH resources, one periodicity of association between a common signal and a RACH resource may be equal to one RACH resource configuration periodicity. One periodicity of association between a common signal and a RACH resource is used to separately associate eight RACH resources in one RACH resource configuration periodicity with eight SSBs in the SSB set. In another example, it is assumed that one RACH resource configuration periodicity includes four RACH resources, one periodicity of association between a common signal and a RACH resource may be equal to two RACH resource configuration periodicities. One periodicity of association between a common signal and a RACH resource is used to separately associate eight RACH resources in two RACH resource configuration periodicities with eight SSBs in the SSB set.

It should be noted that if in one or more RACH resource configuration periodicities, only some RACH resources are associated with SSBs in the SSB set, and other some RACH resources are not associated with any SSB in the SSB set, in this case, the other some RACH resources may not be used to associate with any SSB, and the other some RACH resources may be excluded from an indication range of the first indication information. In other words, the first indication information does not need to indicate a status of the other some RACH resources. Certainly, the other some RACH resources may also fall within the indication range of the first indication information.

In an implementation, the first indication information includes first information and/or second information. The first information indicates a status of one RACH resource in the RACH resource set. The second information indicates statuses of at least two RACH resources in the RACH resource set, the statuses of the at least two RACH resources are the same, and time division multiplexing or frequency division multiplexing is performed between the at least two RACH resources. The time division multiplexing between two RACH resources means that the two RACH resources have a same frequency domain resource but different time domain resources. The frequency division multiplexing between two RACH resources means that the two RACH resources have a same time domain resource but different frequency domain resources.

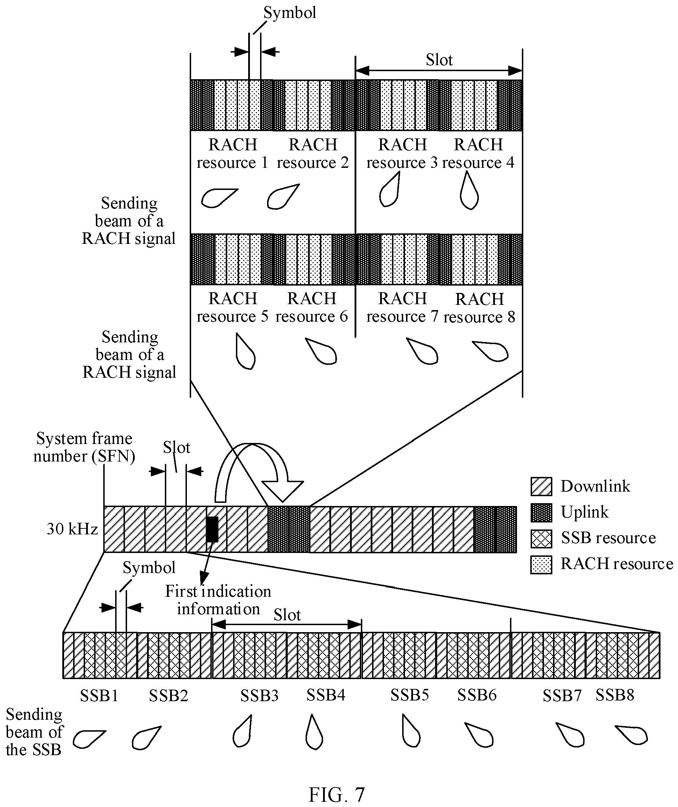

The following provides description with reference to an example in FIG. 7. FIG. 7 is a schematic diagram of a correspondence between a common signal and a RACH resource. An action scope of the first indication information is a RACH resource set in a periodicity, and the periodicity may be a sending periodicity of common signals, a configuration periodicity of RACH resources, or a periodicity of association between a common signal and a RACH resource. In the example of FIG. 7, the common signal set includes a common signal 1 to a common signal 8 (corresponding to the SSB 1 to the SSB8 in FIG. 7 respectively), the RACH resource set includes a RACH resource 1 to a RACH resource 8, the common signal 1 corresponds to the RACH resource 1, the common signal 2 corresponds to the RACH resource 2, the common signal 3 corresponds to the RACH resource 3, the common signal 4 corresponds to the RACH resource 4, the common signal 5 corresponds to the RACH resource 5, the common signal 6 corresponds to the RACH resource 6, the common signal 7 corresponds to the RACH resource 7, and the common signal 8 corresponds to the RACH resource 8. For example, the first indication information shown in FIG. 7 indicates a status of each RACH resource in the RACH resource set, that is, indicates statuses of the RACH resource 1 to the RACH resource 8. In the example in FIG. 7, it is assumed that the configuration periodicity of RACH resources is 10 slots, and RACH resources in each periodicity are configured in two uplink slots in the periodicity. Eight RACH resources in the two slots respectively correspond to eight SSBs, a periodicity of association between the SSB and the RACH is one RACH resource configuration periodicity, and an action scope of the first indication information is a RACH resource configuration periodicity in which the first indication information is located (a first slot to a tenth slot as shown in FIG. 7), used to indicate statuses of RACH resources in two uplink slots in the RACH resource configuration periodicity. For example, eight bits may be used to respectively indicate respective statuses of eight RACH resources in the two slots.

In an implementation, the first indication information includes eight bits, and each bit indicates a status of one RACH resource. For example, "0" indicates unavailable, and "1" indicates available. When the first indication information is 11111110, it indicates that the RACH resource 1 to the RACH resource 7 are available, and the RACH resource 8 is unavailable. Each piece of bit information herein is a specific implementation of the first information.

In an implementation, the first indication information includes four bits, and each bit indicates statuses of two RACH resources in frequency division multiplexing. For example, starting from a high-order bit, a first bit indicates statuses of the RACH resource 1 and the RACH resource 5, a second bit indicates statuses of the RACH resource 2 and the RACH resource 6, a third bit indicates statuses of the RACH resource 3 and the RACH resource 7, and a fourth bit indicates statuses of the RACH resource 4 and the RACH resource 8. For example, "0" indicates unavailable, and "1" indicates available. When the first indication information is 1110, it indicates that the RACH resource 1, the RACH resource 5, the RACH resource 2, the RACH resource 6, the RACH resource 3, and the RACH resource 7 are available, but the RACH resource 4 and the RACH resource 8 are unavailable. Each piece of bit information herein is a specific implementation of the second information.

In an implementation, the first indication information includes two bits, and each bit indicates statuses of four RACH resources in time division multiplexing. For example, starting from a high-order bit, a first bit indicates statuses of the RACH resource 1, the RACH resource 2, the RACH resource 3, and the RACH resource 4, and a second bit indicates statuses of the RACH resource 5, the RACH resource 6, the RACH resource 7, and the RACH resource 8. For example, "0" indicates unavailable, and " 1" indicates available. When the first indication information is 10, it indicates that the RACH resource 1, the RACH resource 2, the RACH resource 3, and the RACH resource 4 are all available, and the RACH resource 5, the RACH resource 6, the RACH resource 7, and the RACH resource 8 are all unavailable. Each piece of bit information herein is a specific implementation of the second information.

It should be noted that when the first indication information includes the second information, if the second information indicates that the statuses of the plurality of RACH resources are unavailable, the terminal may further determine the available RACH resources from the plurality of RACH resources based on the priorities of the plurality of RACH resources indicated by the second information. For example, the second information indicates that both the RACH resource 1 and the RACH resource 5 are unavailable. If the terminal determines that the RACH resource 5 is a high-priority RACH resource, the terminal finally determines that the RACH resource 1 is unavailable and the RACH resource 5 is available. Similarly, the base station also determines that the RACH resource 1 is unavailable and the RACH resource 5 is available. For another example, the second information indicates that the RACH resource 1, the RACH resource 2, the RACH resource 3, and the RACH resource 4 are unavailable. If the terminal determines that the RACH resource 1 is a high-priority RACH resource, the terminal finally determines that the RACH resource 1 is available, and the RACH resource 2, the RACH resource 3, and the RACH resource 4 are unavailable. Similarly, the base station also determines that the RACH resource 1 is available, and the RACH resource 2, the RACH resource 3, and the RACH resource 4 are unavailable. Based on this implementation solution, the status of the first RACH resource determined in the foregoing operation 602 is available, or the status of the first RACH resource is unavailable but the first RACH resource is a high-priority RACH resource. This implementation may also be understood as that the second information only indicates that a low-priority RACH resource is unavailable. For a high-priority RACH resource, the second information does not take effect. In this application, the priority of the RACH resource may be configured by using RRC signaling. For example, a priority index is configured for the RACH resource. The priority index 1 indicates a high priority, and the priority index 0 indicates a low priority. Alternatively, a priority index 0 indicates a high priority, and a priority index 1 indicates a low priority. Alternatively, the priority of the RACH resource may be indirectly indicated by using another parameter.

In an implementation, before the foregoing operation 602, the method may further include an operation 604. The base station may send configuration information to the terminal, where the configuration information is for configuring the RACH resource corresponding to each common signal in the foregoing common signal set.

For example, the base station may send a plurality of pieces of same configuration information to the terminal, where the configuration information is for configuring a RACH resource corresponding to each common signal in the common signal set, and the configuration information may be carried in an SIB, an MIB, system information, or a PDCCH corresponding to each common signal. For example, the common signal set includes a common signal 1 to a common signal 8, and the base station adds one piece of configuration information to an SIB, an MIB, system information, or a PDCCH corresponding to each common signal. The configuration information is for configuring RACH resources respectively corresponding to the common signal 1 to the common signal 8.

For another example, the base station may send a plurality of pieces of different configuration information to the terminal, where each piece of configuration information corresponds to one common signal, each piece of configuration information is for configuring a RACH resource corresponding to one common signal, and each piece of configuration information is carried in a SIB, an MIB, system information, or a PDCCH corresponding to a corresponding common signal. For example, if the common signal set includes the common signal 1 to the common signal 8, the base station adds configuration information 1 to the SIB, the MIB, the system information, or the PDCCH corresponding to the common signal 1, and the configuration information 1 is for configuring the RACH resource corresponding to the common signal 1. The base station adds the configuration information 2 to the SIB, the MIB, the system information, or the PDCCH corresponding to the common signal 2, where the configuration information 2 is for configuring the RACH resource corresponding to the common signal 2, and so on.

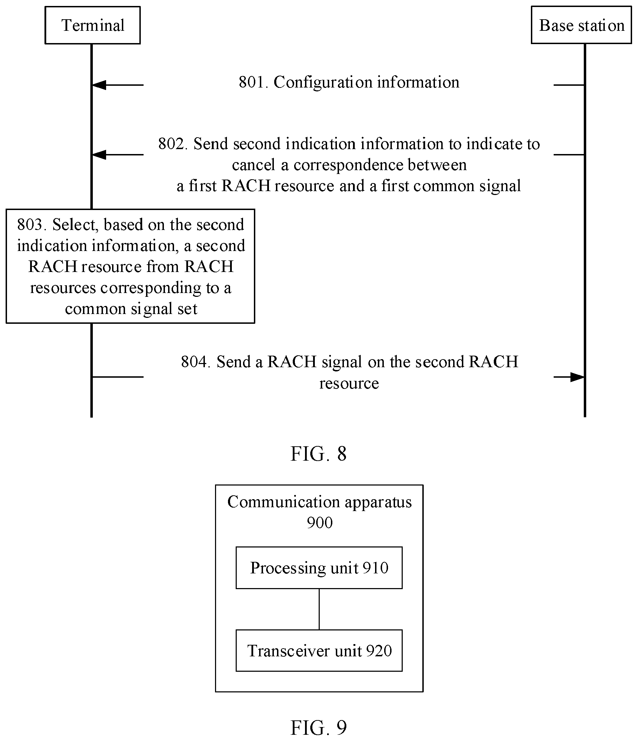

FIG. 8 is a schematic diagram of a random access method according to an embodiment of this application. In the method, the base station indicates, by using the second indication information, the terminal to cancel the correspondence between the common signal and the RACH resource, that is, indicates that the RACH resource corresponding to the common signal is unavailable. Then, when the terminal selects, based on the second indication information, the RACH resource used to send the RACH signal, and the RACH resource whose correspondence between the RACH resource and the common signal is cancelled is not selected, so that the RACH resource can be flexibly selected based on an indication of the base station.

The method includes the following operations:
801. Abase station sends configuration information to a terminal. Correspondingly, the terminal receives the configuration information.

The configuration information is used to configure a RACH resource corresponding to each common signal in the common signal set. For specific implementation of the configuration information, refer to the foregoing operation 604.

802. The base station sends second indication information. Correspondingly, the terminal receives the second indication information.

The second indication information indicates to cancel the correspondence between the first RACH resource and the first common signal. Alternatively, it is understood that the second indication information is for indicating that the first RACH resource is unavailable. Alternatively, it is understood that the second indication information is for indicating that the first RACH resource is muted.

The first common signal is a common signal detected by the terminal in the common signal set, a RACH resource corresponding to the first common signal includes a first RACH resource, and the first RACH resource belongs to the RACH resource set corresponding to the common signal set. The foregoing example 1 is used as an example. When the first common signal is a common signal 1, the first RACH resource may be a RACH resource 1, a RACH resource 2, or a RACH resource 3. When the first common signal is a common signal 3, the first RACH resource may be a RACH resource 5 or a RACH resource 6.

803. The terminal selects, based on the second indication information, a second RACH resource from RACH resources corresponding to a common signal set, where the second RACH resource is different from a first RACH resource.

The second RACH resource corresponds to the first common signal or the second common signal in the common signal set. The second common signal is different from the first common signal, and the second common signal is also a common signal detected by the terminal.

804. The terminal sends a RACH signal on the second RACH resource. Correspondingly, the base station receives the RACH signal carried on the second RACH resource.

The terminal does not send the RACH signal on the first RACH resource, and the base station does not receive the RACH signal on the first RACH resource.

According to the foregoing solution, a base station may indicate, to the terminal by using the second indication information, to cancel the correspondence between the first common signal and the first RACH resource, that is, to indicate that the first RACH resource is unavailable, and further, when the terminal selects, based on the second indication information, the RACH resource used to send the RACH signal, the first RACH resource is not selected, so that the RACH resource can be flexibly selected based on an indication of the base station.

In an implementation, when a resource is a RACH resource corresponding to a common signal detected by a first terminal, but the base station expects to schedule a second terminal to send an uplink signal by using a time unit (for example, a subframe, a slot, or a sub-slot) in which the resource is located. Herein, the second terminal and the first terminal are located in different geographical locations of a same cell, and the base station needs to receive, by using beams having different beam directions, uplink signals sent by the first terminal and the second terminal. The base station may indicate, to the first terminal by using the second indication information, to cancel the correspondence between the RACH resource and the corresponding common signal, so that the first terminal does not send the RACH signal by using the RACH resource, and the base station may schedule the second terminal to send the uplink signal in a time unit in which the resource is located. By using this method, the problem 1 mentioned above can be solved.

In an implementation, when a resource is a RACH resource corresponding to a common signal detected by the first terminal, but the base station expects to send a downlink signal to the second terminal by using a time unit in which the resource is located, the second terminal and the first terminal herein may be different terminals, or may be a same terminal. The base station may indicate, to the first terminal by using the second indication information, to cancel the correspondence between the RACH resource and the corresponding common signal, so that the first terminal does not use the RACH resource to send the RACH signal. The base station may send the downlink signal to the second terminal by using a time unit in which the RACH resource is located. By using this method, the problem 2 mentioned above can be solved.

Example 1 is used as an example. It is assumed that the second indication information indicates to cancel the correspondence between the RACH resource 1 and the common signal 1. It is assumed that the terminal detects the common signal 1 and the common signal 3, the terminal selects one RACH resource from the RACH resource 2, the RACH resource 3, the RACH resource 5, and the RACH resource 6, and the RACH resource is the second RACH resource. Therefore, based on the second indication information, the terminal may determine the RACH resource that cannot be selected, that is, the RACH resource 1.

In an implementation, in one aspect, the second indication information indicates to cancel the correspondence between the first RACH resource and the first common signal, and further indicates to establish the correspondence between the first RACH resource and a third common signal in another aspect, where the third common signal is a common signal in a common signal set, the third common signal is different from the first common signal, and the third common signal may be the same as the second common signal, or may be different from the second common signal.

Example 1 is used as an example. The second indication information indicates to cancel the correspondence between the RACH resource 1 and the common signal 1. In addition, the second indication information further indicates to establish the correspondence between the RACH resource 1 and the common signal 2. In this case, the updated correspondence is as follows:
The common signal 1 corresponds to a RACH resource 2 and a RACH resource 3.
The common signal 2 corresponds to a RACH resource 1 and a RACH resource 4.
The common signal 3 corresponds to a RACH resource 5 and a RACH resource 6.
The common signal 4 corresponds to a RACH resource 7, a RACH resource 8, and a RACH resource 9.

In an implementation, the second indication information indicates to cancel the correspondence between the first RACH resource and the first common signal in one aspect, and further indicates to establish the correspondence between the third RACH resource and the first common signal in another aspect. The third RACH resource is a RACH resource other than the RACH resource corresponding to the first common signal. For example, the third RACH resource may be a RACH resource originally corresponding to another common signal in the common signal set, or may be a RACH resource originally not corresponding to any common signal in the common signal set. When the third RACH resource is a RACH resource corresponding to the fourth common signal in the common signal set, the second indication information further indicates to cancel the correspondence between the third RACH resource and the fourth common signal.

Example 1 is used as an example. The second indication information indicates to cancel the correspondence between the RACH resource 1 and the common signal 1. In addition, the second indication information further indicates to establish the correspondence between a RACH resource 10 and the common signal 1. If the RACH resource 10 is a RACH resource other than the RACH resource set corresponding to the common signal set, an updated correspondence is shown as follows:
The common signal 1 corresponds to a RACH resource 2, a RACH resource 3, and a RACH resource 10.
The common signal 2 corresponds to a RACH resource 4.
The common signal 3 corresponds to a RACH resource 5 and a RACH resource 6.
The common signal 4 corresponds to a RACH resource 7, a RACH resource 8, and a RACH resource 9.

Example 1 is used as an example. The second indication information indicates to cancel the correspondence between the RACH resource 1 and the common signal 1. In addition, the second indication information further indicates to establish the correspondence between the RACH resource 5 and the common signal 1, and indicates to cancel the correspondence between the RACH resource 5 and the common signal 3. If the RACH resource 5 is a RACH resource in the RACH resource set corresponding to the common signal set, an updated correspondence is shown as follows:
The common signal 1 corresponds to a RACH resource 2, a RACH resource 3, and a RACH resource 5.
The common signal 2 corresponds to a RACH resource 4.
The common signal 3 corresponds to a RACH resource 6.
The common signal 4 corresponds to a RACH resource 7, a RACH resource 8, and a RACH resource 9.

In an implementation, when the second indication information indicates to establish a correspondence between the third RACH resource and the first common signal, and the third RACH resource is a RACH resource other than the RACH resource set, in other words, the third RACH resource is a RACH resource that originally does not correspond to any common signal in the common signal set. In this case, the terminal may establish a correspondence between the third RACH resource and the first common signal based on the second indication information. After the correspondence between the third RACH resource and the first common signal is established, the RACH resource corresponding to the common signal set includes the third RACH resource. Therefore, if the terminal selects the RACH resource used to send the RACH signal after the correspondence between the third RACH resource and the first common signal is established, the foregoing operations 803 and 804 may also be replaced with the following operations 803' and 804':
803'. A terminal selects, based on the second indication information, a third RACH resource from RACH resources corresponding to a common signal set.
804'. The terminal sends a RACH signal on the third RACH resource. Correspondingly, the base station receives the RACH signal carried on the third RACH resource.

In other words, through the foregoing operations 803' and 804', the RACH resource selected by the terminal for sending the RACH signal is the third RACH resource, and the third RACH resource does not originally belong to the RACH resource set corresponding to the common signal set. After the second indication information indicates to establish the correspondence between the third RACH resource and the first common signal, the third RACH resource belongs to the RACH resource set corresponding to the common signal set. In addition, the terminal selects the third RACH resource to send the RACH signal.

In an implementation, the second indication information in the foregoing operation 802 may be indicated based on a granularity of a common signal. In other words, each common signal in the common signal set corresponds to one piece of second indication information, and the second indication information indicates to cancel a correspondence between one or more RACH resources in RACH resources corresponding to the common signal and the common signal.

For example, the common signal set includes a first common signal and a fifth common signal, and the fifth common signal is different from the first common signal. The base station may send, to the terminal, the second indication information corresponding to the first common signal, where the second indication information indicates to cancel a correspondence between one or more RACH resources in RACH resources corresponding to the first common signal and the first common signal. In an implementation, the method for sending the second indication information includes but is not limited to the following method C1 to method C3:
Method C1: A first common signal carries the second indication information, but a fifth common signal does not carry the second indication information.
Method C2: A broadcast message corresponding to the first common signal carries the second indication information, but a broadcast message corresponding to the fifth common signal does not carry the second indication information.
Method C3: A PDCCH corresponding to the first common signal carries the second indication information, but a PDCCH corresponding to the fifth common signal does not carry the second indication information.

The PDCCH herein may be a PDCCH for scheduling a channel carrying a SIB, or a PDCCH for scheduling a paging message, or another PDCCH.

With reference to the foregoing example 1, the base station may send one or more pieces of the following four pieces of indication information to the terminal. The four pieces of indication information are respectively referred to as indication information 1, indication information 2, indication information 3, and indication information 4. The indication information 1 indicates to cancel a correspondence between the common signal 1 and one or more RACH resources in the RACH resource 1, the RACH resource 2, or the RACH resource 3, the indication information 2 indicates to cancel a correspondence between the common signal 2 and the RACH resource 4, the indication information 3 indicates to cancel a correspondence between the common signal 3 and the RACH resource 5 and/or the RACH resource 6, and the indication information 4 indicates to cancel a correspondence between the common signal 4 and one or more RACH resources in the RACH resource 7, the RACH resource 8, or the RACH resource 9. It should be noted that the indication information 1, the indication information 2, the indication information 3, and the indication information 4 herein are specific examples of the second indication information in the foregoing operation 802.

In another implementation, the second indication information in the foregoing operation 802 may be indicated based on a granularity of a common signal set. In other words, one common signal set corresponds to one piece of second indication information, and the second indication information indicates to cancel the correspondence between the first RACH resource and the first common signal. In the following method D1 to method D3, the base station may send a plurality of pieces of second indication information to the terminal. The sent second indication information is in a one-to-one correspondence with common signals in the common signal set, and content of first indication information corresponding to different common signals may be the same or may be different. The second indication information corresponding to each common signal in the common signal set may indicate to cancel a correspondence between any common signal in the common signal set and a RACH resource corresponding to the common signal, instead of merely indicating a correspondence between a specific common signal and a specific RACH resource corresponding to the common signal. Alternatively, in the following method D4, the base station may send a piece of second indication information to the terminal, where the second indication information corresponds to the common signal set. In an implementation, the method for sending the second indication information includes but is not limited to the following method D1 to method D4:
Method D1: Each common signal in the common signal set carries the second indication information.
Method D2: A broadcast message corresponding to each common signal in the common signal set carries the second indication information.
Method D3: A PDCCH corresponding to each common signal in the common signal set carries the second indication information.

The PDCCH herein may be a PDCCH for scheduling a channel carrying a SIB, or a PDCCH for scheduling a paging message, or another PDCCH.

Method D4: A common PDCCH corresponding to the common signal set carries the second indication information.

With reference to the foregoing Example 1, that the first common signal is the common signal 1 is used as an example. If the foregoing method D1, the method D2, or the method D3 is used, the base station sends four pieces of second indication information to the terminal, where each piece of second indication information corresponds to one common signal, and each piece of second indication information has a same function, that is, indicates to cancel a correspondence between the common signal 1 and one or more RACH resources in the RACH resource 1, the RACH resource 2, or the RACH resource 3. If the foregoing method D4 is used, the base station sends one piece of second indication information to the terminal, where the second indication information indicates to cancel a correspondence between the common signal 1 and one or more RACH resources in the RACH resource 1, the RACH resource 2, or the RACH resource 3.

It should be noted that in actual application, the method embodiment corresponding to FIG. 6 and the method embodiment corresponding to FIG. 8 may be separately implemented, or may be combined. In a combined implementation, the base station may indicate a status of each RACH resource in the RACH resource set by using the first indication information. In addition, the base station adjusts a correspondence between one or more RACH resources in the RACH resource set and a common signal in the common signal set by using the second indication information. When selecting the RACH resource used to send the RACH signal, the terminal refers to both the first indication information and the second indication information.

It may be understood that, to implement the functions in the foregoing embodiments, the base station and the terminal include corresponding hardware structures and/or software modules for performing the functions. A person skilled in the art should be easily aware that, based on the units and the method steps in the examples described in embodiments disclosed in this application, this application can be implemented through hardware or a combination of hardware and computer software. Whether a function is executed through hardware or hardware driven by computer software depends on particular application scenarios and design constraint conditions of the technical solutions.

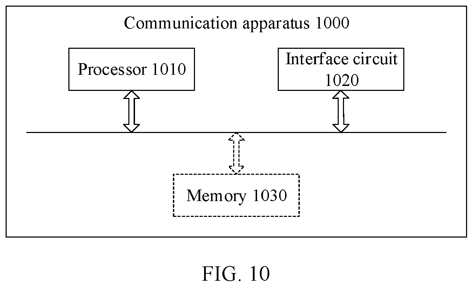

FIG. 9 and FIG. 10 are schematic diagrams of a structure of a possible communication apparatus according to an embodiment of this application. These communication apparatuses may be configured to implement functions of the terminal or the base station in the foregoing method embodiments, and therefore can also achieve beneficial effects of the foregoing method embodiments. In this embodiment of this application, the communication apparatus may be one of the terminals 120a to 120j shown in FIG. 1, or may be the base station 110a or 110b shown in FIG. 1, or may be a module (such as a chip) used in the terminal or the base station.

As shown in FIG. 9, a communication apparatus 900 includes a processing unit 910 and a transceiver unit 920. The communication apparatus 900 is configured to implement a function of the terminal or the base station in the method embodiment shown in FIG. 6 or FIG. 8.

In a first embodiment, when the communication apparatus 900 is configured to implement a function of the terminal in the method embodiment shown in FIG. 6: The transceiver unit 920 is configured to receive first indication information from a radio access network device, where the first indication information indicates statuses of one or more RACH resources in a RACH resource set, and the status is available or unavailable, where each RACH resource in the RACH resource set corresponds to one common signal in a common signal set, the common signal set includes a plurality of common signals, and each common signal in the common signal set corresponds to one or more RACH resources in the RACH resource set; the transceiver unit 920 is further configured to send a RACH signal on the first RACH resource; and the processing unit 910 is configured to select a first RACH resource from the RACH resource set based on the first indication information.

In a possible implementation, the processing unit 910 is specifically configured to select, based on the first indication information, the first RACH resource from RACH resources corresponding to the first common signal, where the first common signal is a common signal detected by the terminal in the common signal set.

In a possible implementation, the transceiver unit 920 is further configured to receive configuration information from a radio access network device, where the configuration information is for configuring a RACH resource corresponding to each common signal in a common signal set, where the configuration information may be carried in an SIB, an MIB, system information, or a PDCCH corresponding to each common signal in the common signal set.

In a second embodiment, when the communication apparatus 900 is configured to implement a function of the base station in the method embodiment shown in FIG. 6: The processing unit 910 is configured to control the transceiver unit 920; the transceiver unit 920 is configured to send first indication information, where the first indication information indicates statuses of one or more RACH resources in a RACH resource set, and the status is available or unavailable, where each RACH resource in the RACH resource set corresponds to one common signal in a common signal set, the common signal set includes a plurality of common signals, and each common signal in the common signal set corresponds to one or more RACH resources in the RACH resource set; and the transceiver unit 920 is further configured to receive a RACH signal carried on a first RACH resource, where the first RACH resource is a RACH resource in the RACH resource set, and a status of the first RACH resource is available, or a status of the first RACH resource is unavailable but the first RACH resource is a high-priority RACH resource.

In a possible implementation, the transceiver unit 920 is further configured to send configuration information, where the configuration information is for configuring a RACH resource corresponding to each common signal in the common signal set, where the configuration information may be carried in an SIB, an MIB, system information, or a PDCCH corresponding to each common signal in the common signal set.

In a third embodiment, when the communication apparatus 900 is configured to implement a function of the terminal in the method embodiment shown in FIG. 8: The transceiver unit 920 is configured to receive configuration information from a radio access network device, where the configuration information is for configuring a RACH resource corresponding to each common signal in a common signal set, where each common signal in the common signal set corresponds to one or more RACH resources, and different common signals in the common signal set correspond to different RACH resources; the transceiver unit 920 is further configured to receive second indication information from the radio access network device, where the second indication information indicates to cancel a correspondence between a first RACH resource and a first common signal, the first common signal is a common signal detected by a terminal in the common signal set, and the RACH resource corresponding to the first common signal includes the first RACH resource; and send a RACH signal on the second RACH resource; and the processing unit 910 is configured to select, based on the second indication information, a second RACH resource from RACH resources corresponding to the common signal set, where the second RACH resource is different from the first RACH resource, the second RACH resource corresponds to the first common signal or a second common signal in the common signal set, the second common signal is different from the first common signal, and the second common signal is a common signal detected by the terminal.

In a fourth embodiment, when the communication apparatus 900 is configured to implement a function of the base station in the method embodiment shown in FIG. 8: The processing unit 910 is configured to control the transceiver unit 920; the transceiver unit 920 is configured to send configuration information, where the configuration information is for configuring a RACH resource corresponding to each common signal in the common signal set, where each common signal in the common signal set corresponds to one or more RACH resources, and different common signals in the common signal set correspond to different RACH resources; the transceiver unit 920 is further configured to send second indication information, where the second indication information indicates to cancel a correspondence between a first RACH resource and a first common signal, and the RACH resource corresponding to the first common signal includes the first RACH resource; and the transceiver unit 920 is further configured to receive a RACH signal carried on a second RACH resource, where the second RACH resource is different from the first RACH resource, the second RACH resource corresponds to the first common signal or a second common signal in the common signal set, and the second common signal is different from the first common signal.

For more detailed descriptions of the processing unit 910 and the transceiver unit 920, refer directly to related descriptions in the method embodiment shown in FIG. 6 or FIG. 8. Details are not described herein again.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions performed by the processor 1010, or store input data required by the processor 1010 to run the instructions, or store data generated after the processor 1010 runs the instructions.

When the communication apparatus 1000 is configured to implement the method shown in FIG. 6 or FIG. 8, the processor 1010 is configured to implement a function of the processing unit 910, and the interface circuit 1020 is configured to implement a function of the transceiver unit 920.

When the foregoing communication apparatus is a chip used in a terminal, the terminal chip implements a function of the terminal in the foregoing method embodiment. The terminal chip receives information from another module (for example, a radio frequency module or an antenna) in the terminal, where the information is sent by a base station to the terminal. Alternatively, the terminal chip sends information to another module (such as a radio frequency module or an antenna) in the terminal, where the information is sent by the terminal to the base station.

When the foregoing communication apparatus is a module used in a base station, the base station module implements a function of the base station in the foregoing method embodiment. The base station module receives information from another module (for example, a radio frequency module or an antenna) in the base station, where the information is sent by the terminal to the base station. Alternatively, the base station module sends information to another module (for example, a radio frequency module or an antenna) in the base station, where the information is sent by the base station to the terminal. The base station module herein may be a baseband chip of the base station, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in a hardware manner or may be implemented in a manner of executing software instructions by a processor. The software instruction may be composed of corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, and a compact optical disk read-only memory (compact disc read-only memory, CD-ROM) or any other form of storage medium well known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in a base station or a terminal. Certainly, the processor and the storage medium may alternatively exist in a base station or a terminal as discrete components.

All or a part of the foregoing embodiments may be implemented by software, hardware, firmware, or any combination thereof. When software is used to implement embodiments, all or a part of embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a base station, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape. It may also be an optical medium, for example, a digital video disc; or may be a semiconductor medium, for example, a solid status disk. The computer-readable storage medium may be a volatile or non-volatile storage medium, or may include two types of storage medium: volatile and non-volatile.

In embodiments of this application, unless otherwise specified and there is a logical conflict, terms and/or descriptions in different embodiments are consistent and may be referenced by each other. Technical features in different embodiments may be combined based on an internal logical relationship thereof to form a new embodiment.

In this application, at least one means one or more, and a plurality of means two or more. The term "and/or" is an association relationship for describing associated objects and represents that three relationships may exist. For example, A and/or B may represent the following three cases: only A exists, both A and B exist, and only B exists, where A and B may be singular or plural. In the text description of this application, the character "/" generally indicates that the associated objects are in an "or" relationship. In the formula of this application, the character "/" indicates that the associated objects are in a "division" relationship.

It may be understood that numerical symbols involved in embodiments of this application are differentiated merely for ease of description, but are not used to limit the scope of embodiments of this application. Sequence numbers of the foregoing processes do not indicate an execution sequence, and an execution sequence of processes shall be determined based on functions and internal logic thereof.

## Claims

1. A random access method, wherein the method is performed by a terminal or a module used in the terminal, and the method comprises:
receiving first indication information from a radio access network device, wherein the first indication information indicates statuses of one or more RACH resources in a random access channel RACH resource set, and the status is available or unavailable, wherein each RACH resource in the RACH resource set corresponds to one common signal in a common signal set, the common signal set comprises a plurality of common signals, and each common signal in the common signal set corresponds to one or more RACH resources in the RACH resource set;
selecting a first RACH resource from the RACH resource set based on the first indication information; and
sending a RACH signal on the first RACH resource.

2. The method according to claim 1, wherein
each common signal in the common signal set carries the first indication information; or
a broadcast message corresponding to each common signal in the common signal set carries the first indication information; or
a physical downlink control channel PDCCH corresponding to each common signal in the common signal set carries the first indication information; or
a common PDCCH corresponding to the common signal set carries the first indication information.

3. The method according to claim 1, wherein the first indication information indicates a status of a RACH resource corresponding to a first common signal in the RACH resource set, but does not indicate a status of a RACH resource corresponding to a second common signal in the RACH resource set, wherein the second common signal is a common signal in the common signal set, the second common signal is different from the first common signal, and the first common signal is a common signal detected by the terminal in the plurality of common signals.

4. The method according to claim 3, wherein
the first common signal carries the first indication information, but the second common signal does not carry the first indication information; or
a broadcast message corresponding to the first common signal carries the first indication information, but a broadcast message corresponding to the second common signal does not carry the first indication information; or
a PDCCH corresponding to the first common signal carries the first indication information, but a PDCCH corresponding to the second common signal does not carry the first indication information.

5. The method according to any one of claims 1 to 4, wherein the selecting a first RACH resource from the RACH resource set based on the first indication information comprises:
selecting, based on the first indication information, the first RACH resource from RACH resources corresponding to the first common signal, wherein the first common signal is a common signal detected by the terminal in the common signal set.

6. The method according to any one of claims 1 to 5, wherein that the first indication information indicates statuses of one or more RACH resources in a RACH resource set comprises:
the first indication information indicates the statuses of the one or more RACH resources in the RACH resource set in a first time window, wherein a length of the first time window is equal to any one of the following, and N is a positive integer:
a configuration periodicity of N RACH resources;
a sending periodicity of N common signals; or
a periodicity of association between N common signals and a RACH resource.

7. The method according to any one of claims 1 to 6, wherein the first indication information comprises first information and/or second information, wherein
the first information indicates a status of one RACH resource in the RACH resource set; and
the second information indicates statuses of at least two RACH resources in the RACH resource set, the statuses of the at least two RACH resources are the same, and time division multiplexing or frequency division multiplexing is performed between the at least two RACH resources.

8. The method according to any one of claims 1 to 7, wherein
a status of the first RACH resource is available; or
a status of the first RACH resource is unavailable, but the first RACH resource is a high-priority RACH resource.

9. A random access method, comprising:
sending first indication information, wherein the first indication information indicates statuses of one or more RACH resources in a random access channel RACH resource set, and the status is available or unavailable, wherein each RACH resource in the RACH resource set corresponds to one common signal in a common signal set, the common signal set comprises a plurality of common signals, and each common signal in the common signal set corresponds to one or more RACH resources in the RACH resource set; and
receiving a RACH signal carried on a first RACH resource, wherein the first RACH resource is a RACH resource in the RACH resource set, and a status of the first RACH resource is available, or a status of the first RACH resource is unavailable but the first RACH resource is a high-priority RACH resource.

10. The method according to claim 9, wherein
each common signal in the common signal set carries the first indication information; or
a broadcast message corresponding to each common signal in the common signal set carries the first indication information; or
a physical downlink control channel PDCCH corresponding to each common signal in the common signal set carries the first indication information; or
a common PDCCH corresponding to the common signal set carries the first indication information.

11. The method according to claim 9, wherein the first indication information indicates a status of a RACH resource corresponding to a first common signal in the RACH resource set, but does not indicate a status of a RACH resource corresponding to a second common signal in the RACH resource set, wherein the second common signal is a common signal in the common signal set, and the second common signal is different from the first common signal, wherein
the first common signal carries the first indication information, but the second common signal does not carry the first indication information; or
a broadcast message corresponding to the first common signal carries the first indication information, but a broadcast message corresponding to the second common signal does not carry the first indication information; or
a PDCCH corresponding to the first common signal carries the first indication information, but a PDCCH corresponding to the second common signal does not carry the first indication information.

12. The method according to any one of claims 9 to 11, wherein the first RACH resource corresponds to the first common signal, and the first common signal is a common signal detected by a terminal in the common signal set.

13. The method according to any one of claims 9 to 12, wherein that the first indication information indicates statuses of one or more RACH resources in a RACH resource set comprises:
the first indication information indicates the statuses of the one or more RACH resources in the RACH resource set in a first time window, wherein a length of the first time window is equal to any one of the following, and N is a positive integer:
a configuration periodicity of N RACH resources;
a sending periodicity of N common signals; or
a periodicity of association between N common signals and a RACH.

14. The method according to any one of claims 9 to 13, wherein the first indication information comprises first information and/or second information, wherein
the first information indicates a status of one RACH resource in the RACH resource set; and
the second information indicates statuses of at least two RACH resources in the RACH resource set, the statuses of the at least two RACH resources are the same, and time division multiplexing or frequency division multiplexing is performed between the at least two RACH resources.

15. A communication apparatus, comprising:
a transceiver unit, configured to receive first indication information from a radio access network device, wherein the first indication information indicates statuses of one or more RACH resources in a random access channel RACH resource set, and the status is available or unavailable, wherein each RACH resource in the RACH resource set corresponds to one common signal in a common signal set, the common signal set comprises a plurality of common signals, and each common signal in the common signal set corresponds to one or more RACH resources in the RACH resource set; and
a processing unit, configured to select a first RACH resource from the RACH resource set based on the first indication information, wherein
the transceiver unit is further configured to send a RACH signal on the first RACH resource.

16. A communication apparatus, comprising: a processing unit and a transceiver unit, wherein
the processing unit is configured to control the transceiver unit;
the transceiver unit is configured to send first indication information, wherein the first indication information indicates statuses of one or more RACH resources in a random access channel RACH resource set, and the status is available or unavailable, wherein each RACH resource in the RACH resource set corresponds to one common signal in a common signal set, the common signal set comprises a plurality of common signals, and each common signal in the common signal set corresponds to one or more RACH resources in the RACH resource set; and
the transceiver unit is further configured to receive a RACH signal carried on a first RACH resource, wherein the first RACH resource is a RACH resource in the RACH resource set, and a status of the first RACH resource is available, or a status of the first RACH resource is unavailable but the first RACH resource is a high-priority RACH resource.

17. A communication apparatus, comprising a module configured to perform the method according to any one of claims 1 to 8 or a module configured to perform the method according to any one of claims 9 to 14.

18. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 8 or the method according to any one of claims 9 to 14 by using a logic circuit or by executing code instructions.

19. A computer program product, wherein the computer program product comprises a computer program, and when the computer program is executed by a communication apparatus, the method according to any one of claims 1 to 14 is implemented.

20. A computer-readable storage medium, wherein the storage medium stores a computer program or instructions, and when the computer program or instructions are executed by a communication apparatus, the method according to any one of claims 1 to 14 is implemented.

21. A communication system, comprising the communication apparatus configured to perform the method according to any one of claims 1 to 8 and the communication apparatus configured to perform the method according to any one of claims 9 to 14.
